# EUROPEAN PATENT APPLICATION

(11) **EP 4 418 582 A1**
(43) Date of publication of application: **21.08.2024**
(21) Application number: 21960186.1
(22) Date of filing: 12.10.2021
(51) Int. Cl.: H04L 1/18

(54) **SIGNAL TRANSCEIVING METHOD AND APPARATUS, AND COMMUNICATION SYSTEM**

(71) Applicant: FUJITSU LIMITED, Kawasaki-shi, Kanagawa 211-8588 (JP)
(72) Inventor: LI, Guorong, Beijing 100022 (CN); JIA, Meiyi, Beijing 100022 (CN); ZHANG, Lei, Beijing 100022 (CN); WANG, Xin, Beijing 100022 (CN)
(74) Representative: Haseltine Lake Kempner LLP
(86) International application number: PCT/CN2021/123295
(87) International publication number: WO 2023/060437

(57) **Abstract**

Embodiments of this disclosure provide an apparatus for transceiving a signal, applicable to a terminal equipment, the terminal equipment performing sidelink (SL) transmission on more than one sidelink carrier, the apparatus comprising a first transceiver unit, the first transceiver unit being configured to enable the terminal equipment to: perform physical sidelink shared channel (PSSCH) transmission on at least one first SL carrier of the more than one sidelink (SL) carrier; and perform radio link failure (RLF) detection on the first SL carrier.

## Description

### Technical Field

This disclosure relates to the field of communication technologies.

### Background

5G Release 16 (R16) begins to support NR sidelink communication. When a terminal equipment (such as a UE) is within or outside network coverage, the UE supports sidelink transmission and reception on a PC5 interface. NR sidelink communication may be used to support V2X services, public safety services, and other commercial services.

NR sidelink communication supports three types of signal transmission modes, namely unicast, groupcast, and broadcast.

In NR sidelink communication, the UE may work in two resource allocation modes, a scheduled resource allocation mode (mode-1) and an autonomous resource selection mode by the (mode-2). In mode-1, the UE needs to be in an RRP_CONNECTED state to transmit data, and an NG radio access network (NG-RAN), such as an NG-eNB or gNB, schedules a sidelink to transmit resources; and in mode-2, the UE may transmit sidelink data when it is within NG-RAN coverage (regardless of which RRC state the UE is in) or outside the NG-RAN coverage, and autonomously select transmission resources from a resource pool.

It should be noted that the above description of the background is merely provided for clear and complete explanation of this disclosure and for easy understanding by those skilled in the art. And it should not be understood that the above technical solution is known to those skilled in the art as it is described in the background of this disclosure.

### Summary of the Disclosure

In a scenario of using a single carrier for sidelink unicast communication, a terminal equipment may perform sidelink radio link failure (SL RLF) detection on the unicast link or PC5 RRC connection to which the unicast link corresponds.

It was found by the inventors that when carrier aggregation (CA) is used in sidelink communication, a sidelink (SL) unicast link between terminal equipments operates by using more than one carrier or component carriers (CCs). Hence, an original RLF detection method applicable to single carrier sidelink communication scenarios is inapplicable to sidelink communication scenarios where carrier aggregation is used due to the inability to distinguish quality of sidelink carriers. Therefore, in the scenario of using carrier aggregation for sidelink communication, how to perform RLF detection has become a problem that needs to be solved.

Addressed to at least one of the above problems, embodiments of this disclosure provide a method and an apparatus for transceiving a signal and a communication system, in which in a scenario where a terminal equipment performs SL transmission on more than one sidelink (SL) carrier, radio link failure (RLF) detection is performed on a first SL carrier performing physical sidelink shared channel (PSSCH) transmission. Hence, in a scenario of using carrier aggregation for sidelink communication, SL RLF detection may be performed and quality of the sidelink carriers may be distinguished.

According to an aspect of the embodiments of this disclosure, there is provided an apparatus for transceiving a signal, applicable to a terminal equipment, the terminal equipment performing sidelink (SL) transmission on more than one sidelink carrier, the apparatus including a first transceiver unit, the first transceiver unit being configured to enable the terminal equipment to:
perform physical sidelink shared channel (PSSCH) transmission on at least one first SL carrier of the more than one sidelink (SL) carrier; and
perform radio link failure (RLF) detection on the first SL carrier.

According to another aspect of the embodiments of this disclosure, there is provided an apparatus for transceiving a signal, applicable to a terminal equipment, the terminal equipment receiving sidelink (SL) transmission on more than one sidelink carrier, the apparatus including a second transceiver unit, the second transceiver unit being configured to enable the terminal equipment to:
receive PSSCH transmission on at least one first SL carrier of the more than one sidelink (SL) carrier; and
transmit PSFCHs for the PSSCH transmission on a second SL carrier.

An advantage of the embodiments of this disclosure exists in that in a scenario of using carrier aggregation for sidelink communication, SL RLF detection may be performed and quality of the sidelink carriers may be distinguished. Hence, use of radio resources of sidelink carriers where RLFs occur or of poor qualities for data transmission may be avoided, thereby avoiding loss of sidelink data or waste of resources.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the spirits and scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprise/include" when used in this specification is taken to specify the presence of stated features, integers, steps or components but does not preclude the presence or addition of one or more other features, integers, steps, components or groups thereof.

### Brief Description of the Drawings

Elements and features depicted in one drawing or embodiment of the invention may be combined with elements and features depicted in one or more additional drawings or embodiments. Moreover, in the drawings, like reference numerals designate corresponding parts throughout the several views and may be used to designate like or similar parts in more than one embodiment.
FIG. 1 is schematic diagram of performing SL RLF detection and SL RLF declaration without distinguishing carriers in a carrier aggregation scenario;
FIG. 2 is a schematic diagram of the method for transceiving a signal in the embodiment of the first aspect of this disclosure;
FIG. 3 is a schematic diagram of Implementation A;
FIG. 4 is a schematic diagram of a correspondence between different time resources and/or frequency resources of a PSFCH and different first SL carriers;
FIG. 5 is a schematic diagram of a correspondence between different bit groups of a PSFCH and different first SL carriers;
FIG. 6 is a schematic diagram of the method for transceiving a signal in the embodiment of the second aspect of this disclosure;
FIG. 7 is a schematic diagram of the apparatus for transceiving a signal in the embodiment of the third aspect of this disclosure;
FIG. 8 is a schematic diagram of the apparatus for transceiving a signal in the embodiment of the fourth aspect of this disclosure; and
FIG. 9 is a schematic diagram of the terminal equipment in the embodiment of the fifth aspect of this disclosure.

### Detailed Description of the Disclosure

These and further aspects and features of this disclosure will be apparent with reference to the following description and attached drawings. In the description and drawings, particular embodiments of the invention have been disclosed in detail as being indicative of some of the ways in which the principles of the invention may be employed, but it is understood that the invention is not limited correspondingly in scope. Rather, the invention includes all changes, modifications and equivalents coming within the spirit and terms of the appended claims.

In the embodiments of this disclosure, terms "first", and "second", etc., are used to differentiate different elements with respect to names, and do not indicate spatial arrangement or temporal orders of these elements, and these elements should not be limited by these terms. Terms "and/or" include any one and all combinations of one or more relevantly listed terms. Terms "contain", "include" and "have" refer to existence of stated features, elements, components, or assemblies, but do not exclude existence or addition of one or more other features, elements, components, or assemblies.

In the embodiments of this disclosure, single forms "a", and "the", etc., include plural forms, and should be understood as "a kind of' or "a type of" in a broad sense, but should not defined as a meaning of "one"; and the term "the" should be understood as including both a single form and a plural form, except specified otherwise. Furthermore, the term "according to" should be understood as "at least partially according to", the term "based on" should be understood as "at least partially based on", except specified otherwise.

In the embodiments of this disclosure, the term "communication network" or "wireless communication network" may refer to a network satisfying any one of the following communication standards: long term evolution (LTE), long term evolution-advanced (LTE-A), wideband code division multiple access (WCDMA), and highspeed packet access (HSPA), etc.

And communication between devices in a communication system may be performed according to communication protocols at any stage, which may, for example, include but not limited to the following communication protocols: 1G (generation), 2G, 2.5G, 2.75G, 3G, 4G, 4.5G and 5G and new radio (NR) in the future, etc., and/or other communication protocols that are currently known or will be developed in the future.

In the embodiments of this disclosure, the term "network device", for example, refers to a device in a communication system that accesses a terminal equipment to the communication network and provides services for the terminal equipment. The network device may include but not limited to the following equipment: an integrated access and backhaul node (IAB node), a base station (BS), an access point (AP), a transmission reception point (TRP), a broadcast transmitter, a mobile management entity (MME), a gateway, a server, a radio network controller (RNC), a base station controller (BSC), etc.

The base station may include but not limited to a node B (NodeB or NB), an evolved node B (eNodeB or eNB), and a 5G base station (gNB), etc. Furthermore, it may include a remote radio head (RRH), a remote radio unit (RRU), a relay, or a low-power node (such as a femto, and a pico, etc.). The term "base station" may include some or all of its functions, and each base station may provide communication coverage for a specific geographical area. And a term "cell" may refer to a base station and/or its coverage area, depending on a context of the term.

In the embodiments of this disclosure, the term "user equipment (UE)" or "terminal equipment (TE) or terminal device" refers to, for example, an equipment accessing to a communication network and receiving network services via a network device. The terminal equipment may be fixed or mobile, and may also be referred to as a mobile station (MS), a terminal, a subscriber station (SS), an access terminal (AT), or a station, etc.

The terminal equipment may include but not limited to the following devices: a cellular phone, a personal digital assistant (PDA), a wireless modem, a wireless communication device, a hand-held device, a machine-type communication device, a lap-top, a cordless telephone, a smart cell phone, a smart watch, and a digital camera, etc.

For another example, in a scenario of the Internet of Things (IoT), etc., the user equipment may also be a machine or a device performing monitoring or measurement. For example, it may include but not limited to a machine-type communication (MTC) terminal, a vehicle mounted communication terminal, a device to device (D2D) terminal, and a machine to machine (M2M) terminal, etc.

Moreover, the term "network side" or "network device side" refers to a side of a network, which may be a base station or a core network device, and may include one or more network devices described above. The term "user side" or "terminal side" or "terminal equipment side" refers to a side of a user or a terminal, which may be a UE, and may include one or more terminal equipments described above.

Without causing confusion, the terms "uplink control signal" and "uplink control information (UCI)" or "physical uplink control channel (PUCCH)" are interchangeable, and terms "uplink data signal" and "uplink data information" or "physical uplink shared channel (PUSCH)" are interchangeable.

The terms "downlink control signal" and "downlink control information (DCI)" or "physical downlink control channel (PDCCH)" are interchangeable, and the terms "downlink data signal" and "downlink data information" or "physical downlink shared channel (PDSCH)" are interchangeable.

In addition, transmitting or receiving a PUSCH may be understood as transmitting or receiving uplink data carried by the PUSCH, transmitting or receiving a PUCCH may be understood as transmitting or receiving uplink information carried by the PUSCH, transmitting or receiving a PRACH may be understood as transmitting or receiving a preamble carried by the PRACH. An uplink signal may include an uplink data signal and/or an uplink control signal, etc., and may also be referred to as uplink (UL) transmission or uplink information or an uplink channel. Transmitting uplink transmission on an uplink resource may be understood as transmitting the uplink transmission by using the uplink resource. And downlink data/signal/channel/information may be understood accordingly.

In the embodiments of this disclosure, higher-layer signaling may be, for example, radio resource control (RRC) signaling; for example, it is referred to as an RRC message, which includes, for example, an MIB, system information, and a dedicated RRC message; or, it is referred to an as an RRC information element (RRC IE). Higher-layer signaling may also be, for example, medium access control (MAC) signaling, or an MAC control element (MAC CE); however, this disclosure is not limited thereto.

In the embodiments of this disclosure, in using carrier aggregation operations for sidelink communication, an SL unicast link between terminal equipments performing sidelink communication operates by using more than one carrier or component carriers (CCs) or frequencies, wherein "a carrier" and "a component carrier" have the same meaning and may be interchangeable, and both of them may be indicated by a frequency and a bandwidth.

When it is determined that an RLF occurs in a carrier, the carrier is deleted. For example, being deleted may also be denoted as being not used, or being replaced by other carriers, etc.

### Embodiment of the first aspect

In a scenario of using a single carrier for sidelink (SL) communication, a media access control (MAC) layer of a terminal equipment at a transmitter end supports sidelink radio link failure (SL RLF) detection based on hybrid automatic repeat request (HARQ), and a radio resource control (RRC) layer supports sidelink radio link failure (RLF) declaration.

A process of SL RLF detection and sidelink RLF declaration is:

### 1) At an MAC layer:

An MAC layer of a terminal equipment (e.g. a UE) of a transmitter end maintains a counter numConsecutiveDTX for each PC5-RRC connection (i.e. logical connection between a source layer-2 ID of the terminal equipment of the transmitter end and a destination layer-2 ID of a terminal equipment of a receiver end). In addition, a network device configures a value sl-maxNumConsecutiveDTX for controlling the SL RLF detection. When the PC5 RRC connection is established, the counter numConsecutiveDTX for the PC5 RRC connection is initialized or reinitialized to be 0; and when sl-maxNumConsecutiveDTX is configured or reconfigured, the counter numConsecutiveDTX for each PC5 RRC connection is initialized or reinitialized to be 0.

For each physical sidelink feedback channel (PSFCH) reception occasion associated with physical sidelink shared channel (PSSCH) transmission:
if the PSFCH reception does not occur at the PSFCH reception occasion, 1 is added to numConsecutiveDTX, and if numConsecutiveDTX reaches sl-maxNumConsecutiveDTX, that a sidelink RLF based on HARQ is detected is indicated to RRC;
and if the PSFCH reception occurs at the PSFCH reception occasion, numConsecutiveDTX is reinitialized to be 0.

### 2) At the RRC layer:

When a maximum number of retransmissions to a specific destination indicated from a sidelink radio link control (RLC) entity has been reached, or, when timer T400 for a specific destination expires, or, when a maximum number of consecutive HARQ DTXs (discontinuous transmissions) to a specific destination indicated from an MAC entity has been reached, or, when integrity check related to sidelink signaling radio bearer 2 (SL-SRB2) or sidelink signaling radio bearer 3 (SL-SRB3) for a specific destination indicated from a sidelink packet data aggregation protocol (PDCP) entity fails, it is deemed that an SL RLF has been detected for the destination, and some other operations are executed.

The above SL RLF detection of the MAC layer and SL RLF declaration of the RRC layer may be used in a single carrier scenario. In performing sidelink communication by using carrier aggregation operations, an SL unicast link between terminal equipments performing sidelink communication operates by using more than one carrier or component carrier (CCs). If carriers are not distinguished in the SL RLF detection based on HARQ of the MAC layer or the SL RLF declaration of the RRC layer, the terminal equipment of the transmitter end is not able to determine which carrier is poor in quality and should be deleted, or should not be used, or should be replaced by other carriers.

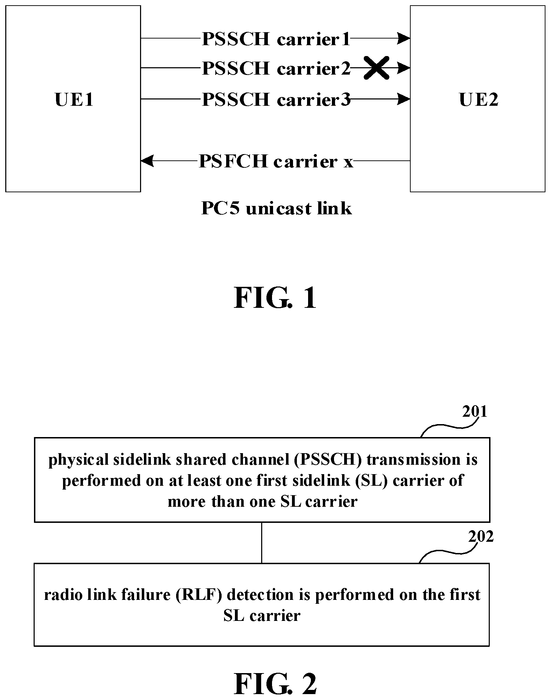

FIG. 1 is schematic diagram of performing SL RLF detection and SL RLF declaration without distinguishing carriers in a carrier aggregation scenario. As shown in FIG. 1, a PC5 unicast link is established between terminal equipment UE1 of the transmitter end and terminal equipment UE2 of the receiver end. UE1 performs physical sidelink shared channel (PSSCH) transmission with UE2 via carrier 1, carrier 2 and carrier 3.

When carrier 2 degrades in radio quality or is unable to operate properly, physical sidelink control channel (PSCCH) transmission and/or PSSCH transmission transmitted by UE1 on carrier 2 is not received correctly by UE2. Therefore, UE2 does not transmit HARQ feedback for the PSSCH transmission to UE1 on carrier x via a physical sidelink feedback channel (PSFCH). As carriers are not distinguished in the SL RLF detection based on HARQ of the MAC layer of UE1 or the SL RLF declaration of the RRC layer, which carrier is poor in quality and should be deleted, or should not be used, or should be replaced by other carriers is unable to be determined. For example, UE1 is unable to determine whether carrier 2 of the PSCCH transmission and/or the PSSCH transmission is poor in radio quality or carrier x receiving the PSFCH is poor in radio quality.

In order to solve the above problems, the embodiment of the first aspect of this disclosure provides a method for transceiving a signal, applicable to a terminal equipment. The terminal equipment may be a terminal equipment of a transmitter end in sidelink communication, such as UE1 in FIG. 1. In the embodiment of the first aspect, "the terminal equipment" refers to the terminal equipment of the transmitter end in sidelink communication, and a terminal equipment performing communication with the terminal equipment is a terminal equipment of a receiver end.

In the embodiment of the first aspect, the terminal equipment performs sidelink communication by using carrier aggregation operations, that is, the terminal equipment performs sidelink (SL) transmission on more than one SL carrier.

FIG. 2 is a schematic diagram of the method for transceiving a signal in the embodiment of the first aspect of this disclosure. As shown in FIG. 2, the method includes:
operation 201: physical sidelink shared channel (PSSCH) transmission is performed on at least one first sidelink (SL) carrier of more than one SL carrier; and
operation 202: radio link failure (RLF) detection is performed on the first SL carrier.

According to the embodiment of the first aspect of this disclosure, in the sidelink communication scenario using carrier aggregation, RLF detection may be performed on the sidelink carriers and qualities of the sidelink carriers may be distinguished. Therefore, the terminal equipment may determine sidelink carriers where RLFs occur or poor in qualities, and use of radio resources of sidelink carriers where RLFs occur or of poor qualities for data transmission may be avoided, thereby avoiding loss of sidelink data or waste of resources.

In the embodiment of the first aspect, the first SL carrier is used for PSSCH transmission, hence, the first SL carrier may also be referred to as a carrier of a PSSCH, or a transmission carrier, etc. In addition, the first SL carrier may also be used for transmission of a physical sidelink control channel (PSCCH), which may be used to schedule the PSSCH transmission, for example, the PSCCH indicates HARQ-related information of the PSSCH transmission and sidelink resources where it is located.

In the embodiment of the first aspect, the performing radio link failure (RLF) detection on the first SL carrier includes:
receiving a physical sidelink feedback channel (PSFCH) for the PSSCH transmission by the terminal equipment on a second SL carrier associated with the first SL carrier.

The second SL carrier is used for PSFCH transmission; hence, the second SL carrier may also be referred to as a carrier of the PSFCH. The second SL carrier associated with the first SL carrier may include: an SL carrier where a PSFCH channel or a PSFCH reception occasion where hybrid automatic repeat request (HARQ) feedback to which the PSSCH transmission corresponds is located.

For example, for PSSCH transmission transmitted on the first SL carrier, the PSFCH channel where the hybrid automatic repeat request (HARQ) feedback to which the PSSCH transmission corresponds is located is on the second SL carrier, or the PSFCH channel may be on more than one SL carrier, but the PSFCH reception occasion where the hybrid automatic repeat request (HARQ) feedback is located to which the PSSCH transmission corresponds is on the second SL carrier, and the terminal equipment receives the PSFCH for the PSSCH transmission on the second SL carrier.

Different implementations of the method for transceiving a signal in the embodiment of the first aspect shall be described below.

### Implementation A

In Implementation A, the first SL carrier is identical to the second SL carrier. For example, the terminal equipment transmits the PSSCH transmission on the first SL carrier, and the PSFCH channel or PSFCH reception occasion of the hybrid automatic repeat request (HARQ) feedback to which the PSSCH transmission corresponds is on the second SL carrier, and the first SL carrier is identical to the second SL carrier.

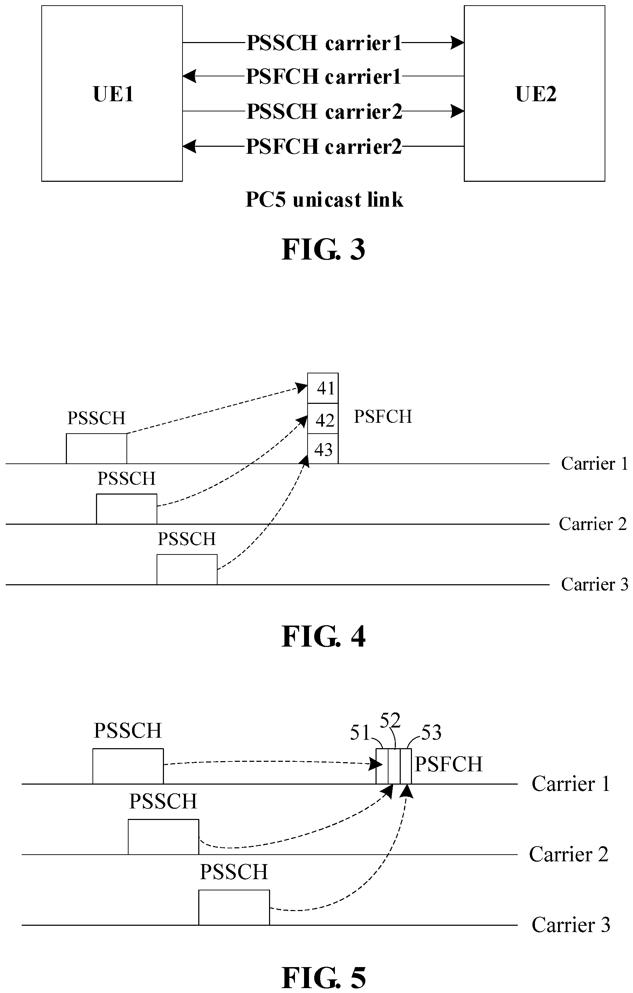

FIG. 3 is a schematic diagram of Implementation A.

As shown in FIG. 3, for example, terminal equipment UE1 transmits the PSSCH transmission on the first SL carrier (e.g. carrier 1), and terminal equipment UE1 receives the PSFCH for the PSSCH on the second SL carrier (e.g. carrier 1) identical to the first SL carrier (e.g. carrier 1), and performs SL RLF detection.

As shown in FIG. 3, for example, terminal equipment UE1 transmits the PSSCH transmission on the first SL carrier (e.g. carrier 2), and terminal equipment UE1 receives the PSFCH for the PSSCH on the second SL carrier (e.g. carrier 2) identical to the first SL carrier (e.g. carrier 2), and performs SL RLF detection.

In implementation A, the first SL carrier and the second SL carrier corresponding thereto may be configured or preconfigured or predefined to be identical. For example, the network may transmit a configuration message to terminal equipment UE1, the configuration message being, for example, an RRC configuration message, or an RRC resume message, etc. In the configuration message, the first SL carrier and the second SL carrier are respectively configured with identical frequencies and/or bandwidths, or a frequency and/or a bandwidth of the first SL carrier may be included, and that the second SL carrier and the first SL carrier adopt identical configurations is indicated. Methods for the pre-configuration and predefining are similar, and shall not be repeated herein any further.

The MAC layer of the terminal equipment (e.g. UE1) may repeatedly use the HARQ-based SL RLF detection method in the scenario of using a single carrier for sidelink SL communication for one or more first SL carriers (e.g. carrier 1 and/or carrier 2 mentioned above).

In implementation A, the first SL carrier may be:
a carrier in all SL carriers in more than one SL carrier, that is, for each SL carrier used by the terminal equipment (e.g. UE1) for SL communication, the PSFCH to which the PSSCH transmitted on the SL carrier corresponds is received on an SL carrier identical to the SL carrier, and the HARQ-based SL RLF detection method in the scenario of using a single carrier for sidelink communication is used to perform SL RLF detection on the carrier;
or, a primary component carrier (PCC) in more than one SL carrier, that is, for a primary component carrier used by the terminal equipment (e.g. UE1) for SL communication, the PSFCH to which the PSSCH transmitted on the primary component carrier corresponds is received on the primary component carrier, and the HARQ-based SL RLF detection method in the scenario of using a single carrier for sidelink SL communication is used to perform SL RLF detection on the PCC;
or, for a licensed carrier in more than one SL carrier, that is, for each SL carrier in a licensed carrier more than one licensed carrier used by the terminal equipment (e.g. UE1) for SL communication, the PSFCH to which the PSSCH transmitted on the licensed carrier corresponds is received on the licensed carrier, and the HARQ-based SL RLF detection method in the scenario of using a single carrier for sidelink SL communication is used to perform SL RLF detection on the licensed carrier;
or, one carrier in more than one SL carrier for receiving the PSFCH, for example, for SL carriers used by the terminal equipment (e.g. UE1) for SL communication, an SL carrier is used for receiving the PSFCH, then the terminal equipment transmits the PSSCH on the SL carrier, and receives the PSFCH for the PSSCH on the carrier, and the HARQ-based SL RLF detection method in the scenario of using a single carrier for sidelink SL communication is used to perform SL RLF detection on the PSFCH carrier.

In implementation A, in the scenario of using carrier aggregation for SL communication, the SL carrier for transmitting the PSSCH (i.e. the first SL carrier) is identical to the SL carrier for receiving the PSFCH to which the PSSCH corresponds (i.e. the second SL carrier). Thus, the terminal equipment may identify an SL carrier where an SL RLF occurs, which may avoid using a resource of the carrier for data transmission, thereby avoiding loss of data or waste of resources.

### Implementation B:

In implementation B, the first SL carrier is different from the second SL carrier. For example, the terminal equipment transmits the PSSCH transmission on the first SL carrier, the hybrid automatic repeat request (HARQ) feedback or PSFCH reception occasion to which the PSSCH transmission corresponds is on the second SL carrier, and the first SL carrier is different from the first SL carrier.

In implementation B, the first SL carrier and the second SL carrier corresponding thereto may be configured or preconfigured or predefined to be different. For example, the network may transmit a configuration message to terminal equipment UE1, the configuration message being, for example, an RRC configuration message, or an RRC resume message, etc. In the configuration message, the first SL carrier and the second SL carrier are respectively configured with different frequencies and/or bandwidths, or a frequency and/or a bandwidth of the first SL carrier may be included, and that the second SL carrier and the first SL carrier adopt different configurations is indicated. Methods for the pre-configuration and predefining are similar, and shall not be repeated herein any further.

In implementation B, the first SL carrier may be:
a carrier in all SL carriers in more than one SL carrier, that is, for each SL carrier used by the terminal equipment (e.g. UE1) for SL communication, the PSFCH to which the PSSCH transmitted on the SL carrier corresponds is received on a second SL carrier different from the SL carrier, and the HARQ-based SL RLF detection method in the scenario of using a single carrier for sidelink communication is used to perform SL RLF detection on the SL carrier;
or, for a carrier in unlicensed carriers in more than one SL carrier, that is, for an unlicensed carrier or each SL carrier in more than one unlicensed carrier used by the terminal equipment (e.g. UE1) for SL communication, the PSFCH to which the PSSCH transmitted on the unlicensed carrier corresponds is received on the unlicensed carrier, and the HARQ-based SL RLF detection method in the scenario of using a single carrier for sidelink SL communication is used to perform SL RLF detection on the licensed carrier;
or, a secondary component carrier (SCC) in more than one SL carrier, that is, for an SCC used by the terminal equipment (e.g. UE1) for SL communication, the PSFCH to which the PSSCH transmitted on the SCC corresponds is received on the second SL carrier different from the SCC, and the HARQ-based SL RLF detection method in the scenario of using a single carrier for sidelink SL communication is used to perform SL RLF detection on the PCC.

In an embodiment of Implementation B, different time resources and/or frequency resources of the PSFCH indicate feedback of PSSCH transmissions on different first SL carriers. For example, a PSFCH format may include one bit, and different PSFCH time resources and/or frequency resources may correspond to different first SL carriers, and are used for indicating feedback of PSSCH transmissions on different first SL carriers.

FIG. 4 is a schematic diagram of a correspondence between different time resources and/or frequency resources of the PSFCH and different first SL carriers. As shown in FIG. 4, carrier 1, carrier 2 and carrier 3 are respectively used for PSSCH transmission, the PSFCH is received on carrier 1, the PSFCH format may include 1 bit, and time-frequency resource 41, time-frequency resource 42 and time-frequency resource 43 of the PSFCH are respectively used to indicate feedback of PSSCH transmission on carrier 1, feedback of PSSCH transmission on carrier 2 and feedback of PSSCH transmission on carrier 3.

In another embodiment of Implementation B, the PSFCH may include more than one bit group, different bit groups indicating feedback of PSSCH transmissions on different first SL carriers, wherein one bit group may include at least one bit.

FIG. 5 is a schematic diagram of a correspondence between different bit groups of the PSFCH and different first SL carriers. As shown in FIG. 5, carrier 1, carrier 2 and carrier 3 are respectively used for PSSCH transmission, the PSFCH is received on carrier 1, the PSFCH format may include multiple bit groups, wherein bit groups 51, 52 and 53 may be respectively used to indicate feedback of PSSCH transmission on carrier 1, feedback of PSSCH transmission on carrier 2 and feedback of PSSCH transmission on carrier 3.

In a further embodiment of Implementation B, the PSFCH may adopt a specific format, wherein different formats of the PSFCH may indicate feedback of PSSCH transmissions on different first SL carriers. For example, a correspondence between the formats of the PSFCH and the PSSCH carrier (i.e. the first SL carrier) to which the HARQ feedback indicated by the PSFCH corresponds may be as shown in Table 1 below.

**Table 1: The correspondence between the formats of the PSFCH and the PSSCH carrier to which the HARQ feedback indicated by the PSFCH corresponds**

| PSFCH formats | Feedback of PSFCH carriers (assuming carrier 1, carrier 2 and carrier 3) |
|---|---|
| Format 1 | Indicating feedback of carrier 1 |
| Format 2 | Indicating feedback of carrier 2 |
| Format 3 | Indicating feedback of carrier 3 |
| Format 4 | Indicating feedback of carrier 1 and carrier 2 |
| Format 5 | Indicating feedback of carrier 1 and carrier 3 |
| Format 6 | Indicating feedback of carrier 2 and carrier 3 |
| Format 7 | Indicating feedback of carrier 1, carrier 2 and carrier 3 |

In Implementation B, the embodiments shown in FIGs. 4 and 5 may be combined, and the embodiments shown in FIGs. 4 and/or 5 may also be combined with Table 1. For example, the PSFCH may include more than one bit group, and not only the bit groups may be used to indicate feedback of PSSCH transmissions on different carriers, but also different time-frequency resources of the PSFCH may be used to indicate feedback of PSSCH transmissions on different carriers. And furthermore, the PSFCH may have multiple formats, which may be used to indicate feedback of PSSCH transmissions on different carriers.

In Implementation A and Implementation B, the SL RLF detection method of the MAC layer of the terminal equipment based on HARQ feedback may be:
operation 1: the terminal equipment transmits data and/or transmits a signal keeping alive on the first SL carrier; and
operation 2: in a case where no PSFCH is received at the PSSCH transmission reception occasion with which the PSSCH transmission of the first SL carrier is associated or to which the PSSCH transmission of the first SL carrier corresponds, a value of a first counter (e.g. numConsecutiveDTX) to which the first SL carrier corresponds is added by 1, or, in a case where a PSFCH is received at the PSSCH transmission reception occasion with which the PSSCH transmission of the first SL carrier is associated or to which the PSSCH transmission of the first SL carrier corresponds, by the PSFCH indicates that the PSSCH transmission is not received, and a value of a first counter (e.g. numConsecutiveDTX) to which the first SL carrier corresponds is added by 1.

For Implementation B, that the PSFCH indicates that the PSSCH transmission is not received refers to that a bit group corresponding to the PSSCH transmission of the first SL carrier in the PSFCH indicates that the PSSCH transmission is not received. For example, a bit group corresponding to the PSSCH transmission in the PSFCH indicates discontinuous transmission (DTX), thereby indicating that the PSSCH transmission is not received. In the embodiment of the first aspect of this disclosure (such as Implementation A and Implementation B), when the value of the first counter (e.g. numConsecutiveDTX) corresponding to the first SL carrier reaches a preset maximum value (e.g. sl maxNumConsecutiveDTX), it is determined that the first SL carrier has detected an RLF, that is, an RLF has occurred in the first SL carrier. For different first SL carriers, the preset maximum values may be identical or different. In addition, when the preset maximum value is configured for the first time or is reconfigured, the first counter (e.g. numConsecutiveDTX) corresponding to the first SL carrier to which the preset maximum value corresponds is initialized.

In the embodiment of the first aspect of this disclosure, the terminal equipment may perform HARQ-based SL RLF detection on all SL carriers, or perform HARQ-based SL RLF detection on one or more SL carriers, such as performing HARQ-based SL RLF detection on a PCC, or a licensed carrier, or a carrier where the PSFCH is located.

In the embodiment of the first aspect of this disclosure, in a case where it is determined that an RLF is detected in a first SL carrier, the terminal equipment performs at least one of the following operations (1)-(7):
(1) releasing the first SL carrier, such releasing a PCC or a licensed carrier, etc., when the first SL carrier is the PCC or the licensed carrier;
(2) deactivating the first SL carrier, such as deactivating an SCC or an unlicensed carrier when the first SL carrier is the SCC or the unlicensed carrier, etc., wherein in or after deactivating, the terminal equipment may perform at least one of the following operations: not monitoring a physical sidelink control channel (PSCCH) or sidelink control information (SCI) on the first SL carrier, not monitoring a PSCCH or SCI scheduling the first SL carrier, stopping or canceling an SL CSI report for the first SL carrier, clearing or suspending a configured SL grant of the first SL carrier, refreshing data of an SL process or SL buffer associated with the first SL carrier, and not transmitting sidelink-shared channel (SL-SCH) data on the first SL carrier, and not transmitting or monitoring the PSFCH on the first SL carrier;
(3) stopping transmitting a PSCCH and/or a PSSCH by using the first SL carrier;
(4) in carrier selection or reselection, excluding the first SL carrier or not selecting the first SL carrier or determining that the first SL carrier has a maximum channel busy ratio (CBR);
(5) stopping performing SL RLF detection on the first SL carrier, or continuing to perform SL RLF detection on the first SL carrier;
(6) reporting information on the first SL carrier to a network device, such as in a sidelink UE information message, reporting the first SL carrier or an index of the first SL carrier to the network device; or
(7) reporting the information on the first SL carrier to a peer terminal equipment (such as terminal equipment UE2 of the receiver end), such as reporting the first SL carrier or an index of the first SL carrier to the peer terminal equipment via a PC5-RRC message.

In the embodiment of the first aspect, for a sidelink unicast link or PC5-RRC connection or a destination of the terminal equipment (such as terminal equipment UE1 of the transmitter end), when at least one of the following situations occurs, the terminal equipment determines that an RLF occurs in the sidelink:
situation 1: it is detected that an RLF occurs in a first SL carrier of the SL unicast link or the PC5-RRC connection or the destination;
situation 2: it is detected that RLFs occur in all first SL carriers of the SL unicast link or the PC5-RRC connection or the destination; or
situation 3: it is detected that an RLF occurs in one or more predefined first SL carriers of the SL unicast link or the PC5-RRC connection or the destination, wherein the predetermined first SL carrier includes a carrier where a PCC or a licensed carrier or a PSFCH is located.

In situations 1 and 2, the first SL carrier in which an RLF is detected includes the carrier where the PSSCH is located and/or the carrier where the PSFCH is located.

According to the embodiment of the first aspect of this disclosure, in a scenario of using carrier aggregation for sidelink communication, SL RLF detection may be performed on at least one of multiple SL carriers. Hence, the terminal equipment is able to determine the SL carrier where an RLF occurs, and use of radio resources of sidelink carriers where RLFs occur for data transmission may be avoided, thereby avoiding loss of data or waste of resources.

### Embodiment of the second aspect

At least addressed to the problems identical to those in the embodiment of the first aspect, the embodiment of the second aspect of this disclosure provides a method for transceiving a signal, applicable to a terminal equipment. The terminal equipment may be a terminal equipment of a receiver end in sidelink communication, such as UE2 shown in FIG. 3. In the embodiment of the second aspect, "the terminal equipment" refers to a terminal equipment of a transmitter end in sidelink communication, and a terminal equipment performing communication with the terminal equipment is a terminal equipment of a receiver end. The method for transceiving a signal in the embodiment of the second aspect corresponds to the method for transceiving a signal in the embodiment of the first aspect.

In the embodiment of the second aspect, the terminal equipment performs sidelink communication by using carrier aggregation operations, that is, the terminal equipment receives sidelink (SL) transmission on more than one SL carrier.

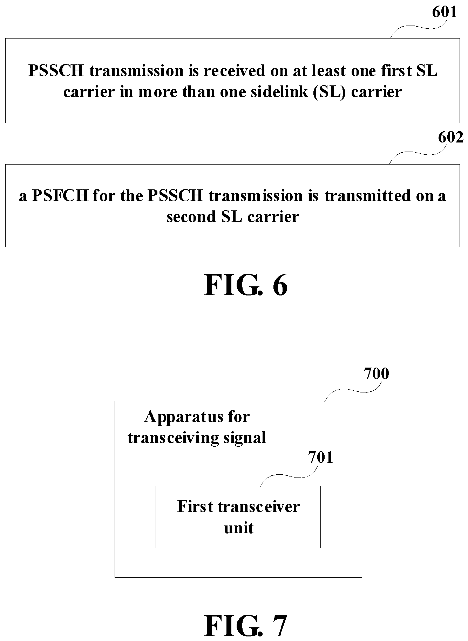

FIG. 6 is a schematic diagram of the method for transceiving a signal in the embodiment of the second aspect of this disclosure. As shown in FIG. 6, the method includes:
operation 601: PSSCH transmission is received on at least one first SL carrier in more than one sidelink (SL) carrier; and
operation 602: a PSFCH for the PSSCH transmission is transmitted on a second SL carrier.

According to the embodiment of the second aspect of this disclosure, in the sidelink communication scenario using carrier aggregation, the PSFCH is transmitted for the PSSCH transmission. Hence, the terminal equipment of the transmitter end may perform RLF detection on the SL carriers for the PSSCH transmission and distinguish qualities of the sidelink carriers, determine sidelink carriers where RLFs occur or poor in qualities. Hence, use of radio resources of sidelink carriers where RLFs occur or of poor qualities for data transmission may be avoided, thereby avoiding loss of sidelink data or waste of resources.

In the embodiment of the second aspect, the first SL carrier is used to receive the PSSCH transmission, hence, it may also be referred to as a carrier of the PSSCH. In addition, the first SL carrier may also be used for transmission of a physical sidelink control channel (PSCCH), wherein the PSCCH may be used to schedule the PSSCH transmission, such as indicating HARQ-related information of the PSSCH transmission and a sidelink resource where it is located.

In the embodiment of the second aspect, the terminal equipment transmits the physical sidelink feedback channel (PSFCH) for the PSSCH transmission on the second SL carrier associated with the first SL carrier. That is, the second SL carrier is used to transmit the PSFCH, hence, the second SL carrier may also be referred to as a carrier of the PSFCH. The second SL carrier associated with the first SL carrier may include: a PSFCH channel where hybrid automatic repeat request (HARQ) feedback to which the PSSCH transmission corresponds is located or an SL carrier where a PSFCH reception occasion is located.

For example, for PSSCH transmission transmitted on the first SL carrier, the PSFCH channel where the hybrid automatic retransmission request (HARQ) feedback to which the PSSCH transmission corresponds is on the second SL carrier, or the PSFCH channel may be on more than one SL carrier, but the PSFCH reception occasion where the hybrid automatic retransmission request (HARQ) feedback to which the PSSCH transmission corresponds is on the second SL carrier, and the terminal equipment of the transmitter end may receive the PSFCH for the PSSCH transmission on the second SL carrier.

Different implementations of the method for transceiving a signal in the embodiment of the second aspect shall be described below.

### Implementation A

In Implementation A, the first SL carrier is identical to the second SL carrier. For example, the terminal equipment receives the PSSCH transmission on the first SL carrier, and transmits the PSFCH for the PSSCH transmission on the second SL carrier identical to the first SL carrier.

In implementation A, the first SL carrier and the second SL carrier corresponding thereto may be configured or preconfigured or predefined to be identical. For example, the network may transmit a configuration message to terminal equipment UE1 (i.e. the terminal equipment of the transmitter end), the configuration message being, for example, an RRC configuration message, or an RRC resume message, etc. In the configuration message, the first SL carrier and the second SL carrier are respectively configured with identical frequencies and/or bandwidths, or a frequency and/or a bandwidth of the first SL carrier may be included, and that the second SL carrier and the first SL carrier adopt identical configurations is indicated. Methods for the pre-configuration and predefining are similar, and shall not be repeated herein any further.

In implementation A, the first SL carrier may be:
a carrier in all SL carriers in more than one SL carrier, that is, for each SL carrier used by the terminal equipment of the transmitter end (e.g. UE1 in FIG. 3) for SL communication, the terminal equipment of the receiver end receives the PSFCH to which the PSSCH transmitted on the SL carrier corresponds on an SL carrier identical to the SL carrier, and the terminal equipment of the transmitter end performs SL RLF detection on the carrier by using the HARQ-based SL RLF detection method in the scenario of using a single carrier for sidelink communication;
or, a primary component carrier (PCC) in more than one SL carrier, that is, for a PSSCH transmitted by the terminal equipment of the transmitter end (e.g. UE1) on the primary component carrier for SL communication, the terminal equipment of the receiver end transmits the PSFCH to which the PSSCH corresponds on the primary component carrier, and the terminal equipment of the transmitter end may perform SL RLF detection on the carrier by using the HARQ-based SL RLF detection method in the scenario of using a single carrier for sidelink communication described in the embodiment of the first aspect;
or, for a carrier in licensed carriers in more than one SL carrier, that is, for a PSSCH transmitted on a licensed carrier or each SL carrier in more than one licensed carrier used by the terminal equipment of the transmitter end (e.g. UE1) for SL communication, the terminal equipment of the receiver end transmits the PSFCH to which the PSSCH corresponds on the licensed carrier, and the terminal equipment of the transmitter end may perform SL RLF detection on the carrier by using the HARQ-based SL RLF detection method in the scenario of using a single carrier for sidelink communication described in the embodiment of the first aspect;
or, one carrier in more than one SL carrier for receiving the PSFCH, for example, for SL carriers used by the terminal equipment of the transmitter end (e.g. UE1) for SL communication, an SL carrier is used for receiving the PSFCH, then the terminal equipment of the transmitter end transmits the PSSCH on the SL carrier, the terminal equipment of the receiver end transmits the PSFCH for the PSSCH, and the terminal equipment of the transmitter end may perform SL RLF detection on the carrier by using the HARQ-based SL RLF detection method in the scenario of using a single carrier for sidelink communication described in the embodiment of the first aspect.

In implementation A, in the scenario of using carrier aggregation for SL communication, for the terminal equipment of the receiver end, the SL carrier for receiving the PSSCH (i.e. the first SL carrier) is identical to the SL carrier for transmitting the PSFCH to which the PSSCH corresponds (i.e. the second SL carrier). Thus, the terminal equipment of the transmitter end may identify an SL carrier where an SL RLF occurs, which may avoid using a resource of the carrier for data transmission, thereby avoiding loss of data or waste of resources.

### Implementation B:

In implementation B, the first SL carrier is different from the second SL carrier. For example, the terminal equipment of the receiver end receives the PSSCH transmission on the first SL carrier, the hybrid automatic repeat request (HARQ) feedback or PSFCH reception occasion to which the PSSCH transmission corresponds is on the second SL carrier, and the first SL carrier is different from the first SL carrier.

In implementation B, the first SL carrier and the second SL carrier corresponding thereto may be configured or preconfigured or predefined to be different. For example, the network may transmit a configuration message to terminal equipment UE1 (i.e. the terminal equipment of the transmitter end), the configuration message being, for example, an RRC configuration message, or an RRC resume message, etc. In the configuration message, the first SL carrier and the second SL carrier are respectively configured with different frequencies and/or bandwidths, or a frequency and/or a bandwidth of the first SL carrier may be included, and that the second SL carrier and the first SL carrier adopt different configurations is indicated. Methods for the pre-configuration and predefining are similar, and shall not be repeated herein any further.

In implementation B, the first SL carrier may be:
a carrier in all SL carriers in more than one SL carrier, that is, for each SL carrier used by the terminal equipment of the transmitter end (e.g. UE1) for SL communication, the terminal equipment of the receiver end transmits the PSFCH to which the PSSCH on the SL carrier correspond on a second SL carrier different from the SL carrier, and the terminal equipment of the transmitter end may perform SL RLF detection on the SL carrier by using the HARQ-based SL RLF detection method in the scenario of using a single carrier for sidelink communication described in the embodiment of the first;
or, for a carrier in unlicensed carriers in more than one SL carrier, that is, for a PSSCH transmitted on an unlicensed carrier or each SL carrier in more than one unlicensed carrier used by the terminal equipment of the transmitter end (e.g. UE1) for SL communication, the terminal equipment of the receiver end transmits the PSFCH to which the PSSCH corresponds on a second SL carrier different from the unlicensed carrier, and the terminal equipment of the transmitter end may perform SL RLF detection on the SL carrier by using the HARQ-based SL RLF detection method in the scenario of using a single carrier for sidelink communication described in the embodiment of the first;
or, a secondary component carrier (SCC) in more than one SL carrier, that is, for a PSSCH transmitted on an SCC used by the terminal equipment of the transmitter end (e.g. UE1) for SL communication, the PSFCH to which the PSSCH corresponds is transmitted on the second SL carrier different from the SCC, and the terminal equipment of the transmitter end may perform SL RLF detection on the SL carrier by using the HARQ-based SL RLF detection method in the scenario of using a single carrier for sidelink communication described in the embodiment of the first.

In an embodiment of Implementation B, different time resources and/or frequency resources of the PSFCH indicate feedback of PSSCH transmissions on different first SL carriers. For example, a PSFCH format may include one bit, and different PSFCH time resources and/or frequency resources may correspond to different first SL carriers, and are used for indicating feedback of PSSCH transmissions on different first SL carriers.

In another embodiment of Implementation B, the PSFCH may include more than one bit group, and different bit groups indicate feedback of PSSCH transmissions on different first SL carriers, wherein one bit group may include at least one bit.

In a further embodiment of Implementation B, the PSFCH may adopt a specific format, wherein different formats of the PSFCH may indicate feedback of PSSCH transmissions on different first SL carriers.

In Implementation B, the above embodiments may be combined, for example, the PSFCH may include more than one bit group, and not only the bit groups may be used to indicate feedback of PSSCH transmissions on different carriers, but also different time-frequency resources of the PSFCH maybe used to indicate feedback of PSSCH transmissions on different carriers.

In Implementation B, if the terminal equipment of the receiver end has not received the PSSCH transmission transmitted by the terminal equipment of the transmitter end, the PSFCH transmitted by the terminal equipment of the receiver end may indicate that the PSSCH transmission has not been received. For example, a bit group in the PSFCH corresponding to the PSSCH transmission may indicate discontinuous transmission (DTX), so as to indicate that the PSSCH transmission has not been received.

Reference may be made to the explanations of Implementation A and Implementation B in the embodiment of the first aspect for detailed explanations of Implementation A and Implementation B.

In the embodiment of the second aspect, when the peer terminal equipment (i.e. the terminal equipment of the transmitter end, such as UE1 in FIG. 3) determines that RLF has occurred in the first SL carrier, the terminal equipment of the receiver end may receive information on the first SL carrier. For example, the terminal equipment of the transmitter end may report a carrier or a carrier index of the first SL where RLF occurred to the terminal equipment of the receiver end via a PC5-RRC message. Hence, the terminal equipment of the receiver end may be informed of the information on the first SL carrier in which RLF occurs.

According to the embodiment of the second aspect of this disclosure, in the sidelink communication scenario using carrier aggregation, the PSFCH is transmitted for the PSSCH transmission, and the terminal equipment of the transmitter end may perform RLF detection on the SL carriers for the PSSCH transmission and distinguish qualities of the sidelink carriers. Therefore, the terminal equipment may determine sidelink carriers where RLFs occur or poor in qualities, and use of radio resources of sidelink carriers where RLFs occur or of poor qualities for data transmission may be avoided, thereby avoiding loss of sidelink data or waste of resources.

### Embodiment of a third aspect

The embodiment of this disclosure provides an apparatus for transceiving a signal, applicable to a terminal equipment, such as terminal equipment UE1 in FIG. 3. The terminal equipment performs SL transmission on more than one sidelink (SL) carrier.

FIG. 7 is a schematic diagram of the apparatus for transceiving a signal in the embodiment of the third aspect. As shown in FIG. 7, an apparatus 700 for transceiving a signal includes a first transceiver unit 701, the first transceiver unit 701 being configured to enable the terminal equipment to:
perform physical sidelink shared channel (PSSCH) transmission on at least one first SL carrier of the more than one sidelink (SL) carrier; and
perform radio link failure (RLF) detection on the first SL carrier.

In at least one embodiment, the perform radio link failure (RLF) detection on the first SL carrier includes:
receiving a physical sidelink feedback channel (PSFCH) for the PSSCH transmission by the terminal equipment on a second SL carrier associated with the first SL carrier.

In at least one embodiment, the second SL carrier includes a PSFCH channel where hybrid automatic repeat request (HARQ) feedback to which the PSSCH transmission corresponds is located or an SL carrier where a reception occasion is located.

In at least one embodiment, the first SL carrier is identical to the second SL carrier, wherein the first SL carrier includes:
a carrier of all SL carriers in the more than one SL carrier, or, a primary component carrier (PCC) in the more than one SL carrier, or, a carrier of licensed carriers in the more than one SL carrier, or, a carrier in the more than one SL carrier used for receiving PSFCHs.

In at least one embodiment, the first SL carrier is different from the second SL carrier, wherein the first SL carrier includes:
a carrier of all SL carriers in the more than one SL carrier, or, a carrier of unlicensed carriers in the more than one SL carrier, or, a secondary component carrier (SCC) in the more than one SL carrier.

In at least one embodiment, different time resources and/or frequency resources of the PSFCH indicate feedback of PSSCH transmissions on different first SL carriers; and/or
the PSFCHs include more than one bit group, different bit groups indicating feedback of PSSCH transmissions on different first SL carriers; and/or
the PSFCH may adopt a specific format, wherein different formats of the PSFCH may indicate feedback of PSSCH transmissions on different first SL carriers.

In at least one embodiment, in a case where no PSFCH is received at a PSFCH reception occasion associated with the PSSCH transmission of the first SL carrier,
a value of a first counter (numConsecutiveDTX) to which the first SL carrier corresponds is added by 1.

In at least one embodiment, in a case where a PSFCH is received at a PSFCH reception occasion associated with the PSSCH transmission of the first SL carrier,
the PSFCH indicates that no PSSCH transmission is received, and a value of the first counter (numConsecutiveDTX) to which the first SL carrier corresponds is added by 1.

In at least one embodiment, a bit group in the PSFCH corresponding to the PSSCH transmission indicates that no PSSCH transmission is received.

In at least one embodiment, when the value of the first counter (numConsecutiveDTX) to which the first SL carrier corresponds reaches a preset maximum value (sl-maxNumConsecutiveDTX), it is determined that an RLF is detected at the first SL carrier.

In at least one embodiment, for different first SL carriers, the preset maximum values are different or identical.

In at least one embodiment, when the preset maximum value is configured for the first time or is reconfigured, the first counter (numConsecutiveDTX) corresponding to the first SL carrier to which the preset maximum value corresponds is initialized.

In at least one embodiment, the first transceiver unit 701 is further configured to:
enable the terminal equipment to perform the following operations in a case where it is determined that an RLF is detected at the first SL carrier:
releasing the first SL carrier; and/or
deactivating the first SL carrier; and/or
stopping transmitting a physical sidelink control channel (PSCCH) and/or a PSSCH by using the first SL carrier; and/or
in carrier selection or reselection, excluding the first SL carrier or not selecting the first SL carrier or determining that the first SL carrier has a maximum channel busy ratio (CBR); and/or
stopping performing SL RLF detection on the first SL carrier, or continuing to perform SL RLF detection on the first SL carrier; and/or
reporting information on the first SL carrier to a network device; and/or
reporting the information on the first SL carrier to a peer terminal equipment.

In at least one embodiment, the first transceiver unit 701 is further configured to:
for a sidelink unicast link (SL unicast link) or PC5-RRC connection or a destination, when at least one of the following conditions occurs, enable the terminal equipment to determine that an RLF occurs in the sidelink;
detecting that an RLF occurs in a first SL carrier of the SL unicast link or PC5-RRC connection or destination;
detecting that RLFs occur in all first SL carriers of the SL unicast link or PC5-RRC connection or destination; or
detecting that RLFs occur in one or more first SL carriers of the SL unicast link or PC5-RRC connection or destination.

In at least one embodiment, the predetermined first SL carrier includes a carrier where a PCC or a licensed carrier or a PSFCH is located.

In at least one embodiment, the first SL carrier in which an RLF is detected includes the carrier where the PSSCH is located and/or the carrier where the PSFCH is located.

### Embodiment of a fourth aspect

The embodiment of this disclosure provides an apparatus for transceiving a signal, applicable to a terminal equipment, such as terminal equipment UE1 in FIG. 3. The terminal equipment performs SL transmission on more than one sidelink (SL) carrier.

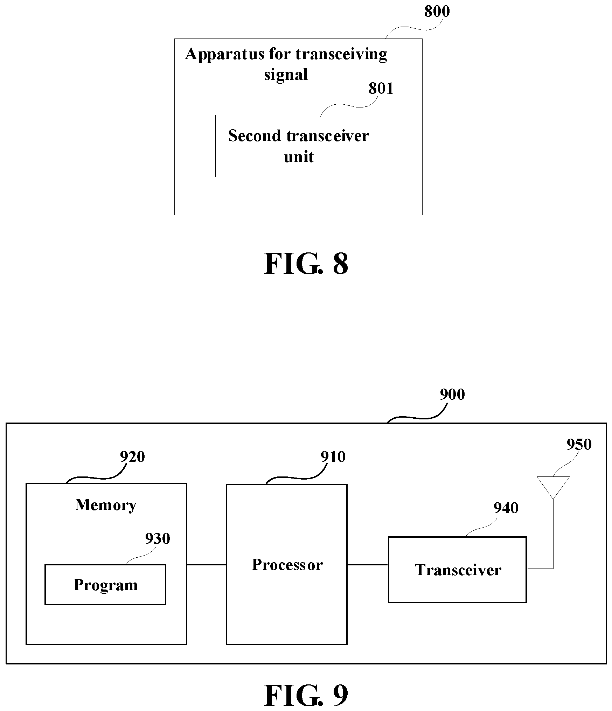

FIG. 8 is a schematic diagram of the apparatus for transceiving a signal in the embodiment of the fourth aspect. As shown in FIG. 8, an apparatus 800 for transceiving a signal includes a second transceiver unit 801, the second transceiver unit 801 being configured to enable the terminal equipment to:
receive PSSCH transmission on at least one first SL carrier of the more than one sidelink (SL) carrier; and
transmit PSFCHs for the PSSCH transmission on a second SL carrier.

In at least one embodiment, the first SL carrier is identical to the second SL carrier, wherein the first SL carrier includes:
a carrier of all SL carriers in the more than one SL carrier, or, a primary component carrier (PCC) in the more than one SL carrier, or, a carrier of licensed carriers in the more than one SL carrier, or, a carrier in the more than one SL carrier used for receiving PSFCHs.

In at least one embodiment, the first SL carrier is different from the second SL carrier, wherein the first SL carrier includes:
a carrier of all SL carriers in the more than one SL carrier, or, a carrier of unlicensed carriers in the more than one SL carrier, or, a secondary component carrier (SCC) in the more than one SL carrier.

In at least one embodiment, different time resources and/or frequency resources of the PSFCHs indicate feedback of PSSCH transmissions on different first SL carriers; and/or
the PSFCHs include more than one bit group, different bit groups indicating feedback of PSSCH transmissions on different first SL carriers; and/or
the PSFCH may adopt a specific format, wherein different formats of the PSFCH may indicate feedback of PSSCH transmissions on different first SL carriers.

In at least one embodiment, if the PSSCH transmission is not received, the PSFCH indicates that the PSSCH transmission is not received. A bit group in the PSFCH corresponding to the PSSCH transmission indicates discontinuous transmission (DTX), so as to indicate that the PSSCH transmission is not received.

In at least one embodiment, the second transceiver unit 801 is further configured as:
enable the terminal equipment to receive information on the first SL carrier when the peer terminal equipment determines that an RLF occurs in the first SL carrier.

### Embodiment of a fifth aspect

The embodiment of this disclosure provides a terminal equipment of a transmitter end and a terminal equipment of a receiver end performing sidelink communication, wherein the terminal equipment of the transmitter end and the terminal equipment of the receiver end may adopt identical structures of a terminal equipment.

FIG. 9 is a schematic diagram of the terminal equipment in the embodiment of the fifth aspect. A terminal equipment shown in FIG. 9 may function as a terminal equipment of a transmitter end, or may function as a terminal equipment of a receiver end.

FIG. 9 is a schematic diagram of the terminal equipment in the embodiment of the fifth aspect. As shown in FIG. 9, the terminal equipment 900 may include a processor 910 (such as a central processing unit (CPU)) and a memory 920, the memory 920 being coupled to the processor 910. The memory 920 may store various data, and furthermore, it may store a program 930 for information processing, and execute the program 930 under control of the processor 910.

For example, the processor 910 may be configured to execute a program to carry out the method as described in the embodiment of the first or the second aspect.

Furthermore, as shown in FIG. 9, the terminal equipment 900 may include a transceiver 940, and an antenna 950, etc. Functions of the above components are similar to those in the related art, and shall not be described herein any further. It should be noted that the terminal equipment 900 does not necessarily include all the parts shown in FIG. 9, and furthermore, the terminal equipment 900 may include parts not shown in FIG. 9, and the related art may be referred to.

An embodiment of this disclosure provides a computer readable program, which, when executed in a terminal equipment, causes the terminal equipment to carry out the method as described in the embodiment of the first or the second aspect.

An embodiment of this disclosure provides a computer storage medium, including a computer readable program, which causes a terminal equipment to carry out the method as described in the embodiment of the first or the second aspect.

The above apparatuses and methods of this disclosure may be implemented by hardware, or by hardware in combination with software. This disclosure relates to such a computer-readable program that when the program is executed by a logic device, the logic device is enabled to carry out the apparatus or components as described above, or to carry out the methods or steps as described above. This disclosure also relates to a storage medium for storing the above program, such as a hard disk, a floppy disk, a CD, a DVD, and a flash memory, etc.

The methods/apparatuses described with reference to the embodiments of this disclosure may be directly embodied as hardware, software modules executed by a processor, or a combination thereof. For example, one or more functional block diagrams and/or one or more combinations of the functional block diagrams shown in the drawings may either correspond to software modules of procedures of a computer program, or correspond to hardware modules. Such software modules may respectively correspond to the steps shown in the drawings. And the hardware module, for example, may be carried out by firming the soft modules by using a field programmable gate array (FPGA).

The soft modules may be located in an RAM, a flash memory, an ROM, an EPROM, an EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile terminal, and may also be stored in a memory card of a pluggable mobile terminal. For example, if equipment (such as a mobile terminal) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in the drawings may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in the drawings may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of the present invention. Various variants and modifications may be made by those skilled in the art according to the spirits and principle of the present invention, and such variants and modifications fall within the scope of the present invention.

As to implementations containing the above embodiments, following supplements are further disclosed.
1. A method for transceiving a signal, applicable to a terminal equipment, the terminal equipment performing sidelink (SL) transmission on more than one sidelink carrier, the method including:
   performing physical sidelink shared channel (PSSCH) transmission on at least one first SL carrier of the more than one sidelink (SL) carrier; and
   performing radio link failure (RLF) detection on the first SL carrier.
2. The method according to supplement 1, wherein,
   the performing radio link failure (RLF) detection on the first SL carrier includes:
   receiving a physical sidelink feedback channel (PSFCH) for the PSSCH transmission by the terminal equipment on a second SL carrier associated with the first SL carrier.
3. The method according to supplement 2, wherein,
   the second SL carrier includes a PSFCH channel where hybrid automatic repeat request (HARQ) feedback to which the PSSCH transmission corresponds is located or an SL carrier where a reception occasion is located.
4. The method according to supplement 2, wherein,
   the first SL carrier is identical to the second SL carrier.
5. The method according to supplement 4, wherein,
   the first SL carrier includes:
   a carrier of all SL carriers in the more than one SL carrier, or, a primary component carrier (PCC) in the more than one SL carrier, or, a carrier of licensed carriers in the more than one SL carrier, or, a carrier in the more than one SL carrier used for receiving PSFCHs.
6. The method according to supplement 2, wherein,
   the first SL carrier is different from the second SL carrier.
7. The method according to supplement 6, wherein,
   the first SL carrier includes:
   a carrier of all SL carriers in the more than one SL carrier, or, a carrier of unlicensed carriers in the more than one SL carrier, or, a secondary component carrier (SCC) in the more than one SL carrier.
8. The method according to supplement 6, wherein,
   different time resources and/or frequency resources of the PSFCHs indicate feedback of PSSCH transmissions on different first SL carriers; and/or
   the PSFCHs include more than one bit group, different bit groups indicating feedback of PSSCH transmissions on different first SL carriers; and/or
   different formats of the PSFCHs indicate feedback of PSSCH transmissions on different first SL carriers.
9. The method according to supplement 6, wherein,
   in a case where no PSFCH is received at a PSFCH reception occasion associated with the PSSCH transmission of the first SL carrier,
   a value of a first counter (numConsecutiveDTX) to which the first SL carrier corresponds is added by 1.
10. The method according to supplement 2, wherein,
   in a case where a PSFCH is received at a PSFCH reception occasion associated with the PSSCH transmission of the first SL carrier,
   the PSFCH indicates that the PSSCH transmission is not received, and a value of a first counter (numConsecutiveDTX) to which the first SL carrier corresponds is added by 1.
11. The method according to supplement 10, wherein,
   a bit group in the PSFCH corresponding to the PSSCH transmission indicates that the PSSCH transmission is not received.
12. The method according to any one of supplements 1-11, wherein,
   when the value of the first counter (numConsecutiveDTX) to which the first SL carrier corresponds reaches a preset maximum value (sl-maxNumConsecutiveDTX), it is determined that an RLF is detected at the first SL carrier.
13. The method according to supplement 12, wherein,
   for different first SL carriers, the preset maximum values are different or identical.
14. The method according to supplement 13, wherein,
   when the preset maximum value is configured for the first time or is reconfigured, the first counter (numConsecutiveDTX) corresponding to the first SL carrier to which the preset maximum value corresponds is initialized.
15. The method according to any one of supplements 1-14, wherein the method further includes:
   performing the following operations by the terminal equipment in a case where it is determined that an RLF is detected for the first SL carrier:
   releasing the first SL carrier; and/or
   deactivating the first SL carrier; and/or
   stopping transmitting a physical sidelink control channel (PSCCH) and/or a PSSCH by using the first SL carrier; and/or
   in carrier selection or reselection, excluding the first SL carrier or not selecting the first SL carrier or determining that the first SL carrier has a maximum channel busy ratio (CBR); and/or
   stopping performing SL RLF detection on the first SL carrier, or continuing to perform SL RLF detection on the first SL carrier; and/or
   reporting information on the first SL carrier to a network device; and/or
   reporting the information on the first SL carrier to a peer terminal equipment.
16. The method according to any one of supplements 1-15, wherein the method further includes:
   for a sidelink unicast link (SL unicast link) or PC5-RRC connection or a destination, when at least one of the following conditions occurs, determining by the terminal equipment that an RLF occurs in the sidelink;
   it is detected that an RLF occurs in a first SL carrier of the SL unicast link or PC5-RRC connection or destination;
   it is detected that RLFs occur in all first SL carriers of the SL unicast link or PC5-RRC connection or destination; or
   it is detected that RLFs occur in one or more first SL carriers of the SL unicast link or PC5-RRC connection or destination.
17. The method according to supplement 16, wherein,
   the predetermined first SL carrier includes a carrier where a PCC or a licensed carrier or a PSFCH is located.
18. The method according to supplement 16, wherein,
   the first SL carrier in which an RLF is detected includes the carrier where the PSSCH is located and/or the carrier where the PSFCH is located.
19. An method for transceiving a signal, applicable to a terminal equipment, the terminal equipment receiving sidelink (SL) transmission on more than one sidelink carrier, the method including:
   receiving PSSCH transmission on at least one first SL carrier of the more than one sidelink (SL) carrier; and
   transmitting PSFCHs for the PSSCH transmission on a second SL carrier.
20. The method according to supplement 19, wherein,
   the first SL carrier is identical to the second SL carrier.
21. The method according to supplement 19, wherein,
   the first SL carrier includes:
   a carrier of all SL carriers in the more than one SL carrier, or, a primary component carrier (PCC) in the more than one SL carrier, or, a carrier of licensed carriers in the more than one SL carrier, or, a carrier in the more than one SL carrier used for receiving PSFCHs.
22. The method according to supplement 19, wherein,
   the first SL carrier is different from the second SL carrier.
23. The method according to supplement 22, wherein,
   the first SL carrier includes:
   a carrier of all SL carriers in the more than one SL carrier, or, a carrier of unlicensed carriers in the more than one SL carrier, or, a secondary component carrier (SCC) in the more than one SL carrier.
24. The method according to supplement 22, wherein,
   different time resources and/or frequency resources of the PSFCHs indicate feedback of PSSCH transmissions on different first SL carriers; and/or
   the PSFCHs include more than one bit group, different bit groups indicating feedback of PSSCH transmissions on different first SL carriers; and/or
   different formats of the PSFCHs indicate feedback of PSSCH transmissions on different first SL carriers.
25. The method according to supplement 22, wherein,
   if the PSSCH transmission is not received, the PSFCH indicates that the PSSCH transmission is not received.
26. The method according to supplement 25, wherein,
   a bit group in the PSFCH corresponding to the PSSCH transmission indicates discontinuous transmission (DTX), so as to indicate that the PSSCH transmission is not received.
27. The method according to any one of supplements 19-26, wherein the method further includes:
   when the peer terminal equipment determines that RLF has occurred in the first SL carrier, the terminal equipment receives information on the first SL carrier.

## Claims

1. An apparatus for transceiving signals, applicable to a terminal equipment, the terminal equipment performing sidelink (SL) transmission on more than one sidelink carrier, the apparatus comprising a first transceiver unit, the first transceiver unit being configured to enable the terminal equipment to:
perform physical sidelink shared channel (PSSCH) transmission on at least one first SL carrier of the more than one sidelink (SL) carrier; and
perform radio link failure (RLF) detection on the first SL carrier.

2. The apparatus according to claim 1, wherein,
the performing radio link failure (RLF) detection on the first SL carrier includes:
receiving a physical sidelink feedback channel (PSFCH) for the PSSCH transmission by the terminal equipment on a second SL carrier associated with the first SL carrier.

3. The apparatus according to claim 2, wherein,
the second SL carrier includes a PSFCH channel where hybrid automatic repeat request (HARQ) feedback to which the PSSCH transmission corresponds is located or an SL carrier where a reception occasion is located.

4. The apparatus according to claim 2, wherein,
the first SL carrier is identical to the second SL carrier.

5. The apparatus according to claim 4, wherein,
the first SL carrier comprises:
a carrier of all SL carriers in the more than one SL carriers, or, a primary component carrier (PCC) in the more than one SL carriers, or, a carrier of licensed carriers in the more than one SL carriers, or, a carrier in the more than one SL carriers used for receiving PSFCHs.

6. The apparatus according to claim 2, wherein,
the first SL carrier is different from the second SL carrier.

7. The apparatus according to claim 6, wherein,
the first SL carrier includes:
a carrier of all SL carriers in the more than one SL carriers, or, a carrier of unlicensed carriers in the more than one SL carriers, or, a secondary component carrier (SCC) in the more than one SL carriers.

8. The apparatus according to claim 2, wherein,
in a case where no PSFCH is received at a PSFCH reception occasion associated with the PSSCH transmission of the first SL carrier,
a value of a first counter (numConsecutiveDTX) to which the first SL carrier corresponds is added by 1.

9. The apparatus according to claim 1, wherein,
when the value of the first counter (numConsecutiveDTX) to which the first SL carrier corresponds reaches a preset maximum value (sl-maxNumConsecutiveDTX), it is judged that an RLF is detected at the first SL carrier.

10. The apparatus according to claim 9, wherein,
for different first SL carriers, the preset maximum values are different or identical.

11. The apparatus according to claim 10, wherein,
when the preset maximum value is configured for the first time or is reconfigured, the first counter (numConsecutiveDTX) corresponding to the first SL carrier to which the preset maximum value corresponds is initialized.

12. The apparatus according to claim 1, wherein the first transceiver unit is further configured to:
enable the terminal equipment to perform the following operations in a case where it is judged that an RLF is detected at the first SL carrier:
releasing the first SL carrier; and/or
deactivating the first SL carrier; and/or
stopping using the first SL carrier to transmit a physical sidelink control channel (PSCCH) and/or a PSSCH; and/or
in carrier selection or reselection, excluding the first SL carrier or not selecting the first SL carrier or judging that the first SL carrier has a maximum channel busy ratio (CBR); and/or
stopping performing SL RLF detection on the first SL carrier, or continuing to perform SL RLF detection on the first SL carrier; and/or
reporting information on the first SL carrier to a network device; and/or reporting the information on the first SL carrier to a peer terminal equipment.

13. The apparatus according to claim 1, wherein the first transceiver unit is further configured to:
for a sidelink unicast link (SL unicast link) or PC5-RRC connection or a destination, when at least one of the following conditions occurs, enable the terminal equipment to determine that an RLF occurs in the sidelink;
detect that an RLF occurs in a first SL carrier of the SL unicast link or PC5-RRC connection or destination;
detect that RLFs occur in all first SL carriers of the SL unicast link or PC5-RRC connection or destination; and
detect that RLFs occur in one or more first SL carriers of the SL unicast link or PC5-RRC connection or destination.

14. An apparatus for transceiving signals, applicable to a terminal equipment, the terminal equipment receiving sidelink (SL) transmission on more than one sidelink carriers, the apparatus comprising a second transceiver unit, the second transceiver unit being configured to enable the terminal equipment to:
receive PSSCH transmission on at least one first SL carrier of the more than one sidelink (SL) carriers; and
transmit PSFCHs for the PSSCH transmission on a second SL carrier.

15. The apparatus according to claim 14, wherein,
the first SL carrier is identical to the second SL carrier.

16. The apparatus according to claim 14, wherein,
the first SL carrier includes:
a carrier of all SL carriers in the more than one SL carriers, or, a primary component carrier (PCC) in the more than one SL carriers, or, a carrier of licensed carriers in the more than one SL carriers, or, a carrier in the more than one SL carriers used for receiving PSFCHs.

17. The apparatus according to claim 14, wherein,
the first SL carrier is different from the second SL carrier.

18. The apparatus according to claim 17, wherein,
the first SL carrier includes:
a carrier of all SL carriers in the more than one SL carriers, or, a carrier of unlicensed carriers in the more than one SL carriers, or, a secondary component carrier (SCC) in the more than one SL carriers.

19. The apparatus according to claim 17, wherein,
different time resources and/or frequency resources of the PSFCHs indicate feedback of PSSCH transmissions on different first SL carriers; and/or
the PSFCHs include more than one bit groups, different bit groups indicating feedback of PSSCH transmissions on different first SL carriers; and/or
different formats of the PSFCHs indicate feedback of PSSCH transmissions on different first SL carriers.

20. A communication system, comprising:
a terminal equipment of a transmitter end and a terminal equipment of a receiver end,
the terminal equipment of the transmitter end including the apparatus for transceiving signals as claimed in any one of claims 1-13;
and the terminal equipment of the receiver end including the apparatus for transceiving signals as claimed in any one of claims 14-19.
